# EUROPÄISCHE PATENTSCHRIFT

(11) **EP 3 433 331 B1**
(45) Veröffentlichungstag und Bekanntmachung des Hinweises auf die Patenterteilung: **16.06.2021**
(21) Anmeldenummer: 17712760.2
(22) Anmeldetag: 21.03.2017
(51) Int. Cl.: C09J 143/04, C09J 201/10, C08L 101/10, C08L 43/04

(54) **VERFAHREN ZUR HERSTELLUNG EINES HAFTKLEBSTOFFS AUF DER BASIS EINES SILANMODIFIZIERTEN POLYMERS UND HAFTKLEBEARTIKEL, WIE EIN KLEBEBAND ODER EIN ETIKETT**
METHOD FOR PRODUCING AN ADHESIVE BASED ON A SILANE-MODIFIED POLYMER AND ADHESIVE ARTICLE, SUCH AS AN ADHESIVE STRIP OR A LABEL
PROCÉDÉ DE PRODUCTION D'UN ADHÉSIF DE CONTACT À BASE D'UN POLYMÈRE MODIFIÉ SILANE ET ARTICLE AUTO-ADHÉSIF TEL QU'UN RUBAN ADHÉSIF OU UNE ÉTIQUETTE

(30) Priorität: 22.03.2016 DE 102016105339
(43) Veröffentlichungstag der Anmeldung: 30.01.2019
(73) Patentinhaber: Coroplast Fritz Müller GmbH & Co. KG, 42279 Wuppertal (DE)
(72) Erfinder: RÖNISCH, Ralf, 42349 Wuppertal (DE); BEITMANN, Marko, 31515 Wunsdorf (DE)
(74) Vertreter: Patent- und Rechtsanwälte Dr. Solf & Zapf
(86) Internationale Anmeldenummer: PCT/EP2017/056731
(87) Internationale Veröffentlichungsnummer: WO 2017/162690

(56) Entgegenhaltungen:
- EP-A1- 2 055 741
- JP-A- 2008 045 059
- US-A- 4 652 610

## Beschreibung

Die vorliegende Erfindung betrifft ein Verfahren zur Herstellung eines Haftklebstoffs auf der Basis eines silanmodifizierten Polymers, welches mindestens ein silylhaltiges Polymer, mindestens ein kompatibles klebrig machendes Harz und mindestens einen Katalysator enthält, wobei der Haftklebstoff aus einem Gemisch von kettenförmigen, silanmodifizierten, alkoxysilierten Präpolymeren hergestellt wird, wobei das Gemisch mindestens ein erstes, silanmodifiziertes, an der Kette seitenständig ethoxysiliertes Präpolymer und mindestens ein zweites silanmodifiziertes, an der Kette endständig und/oder seitenständig ethoxysiliertes und/oder methoxysiliertes Präpolymer enthält, wobei das erste Präpolymer und das zweite Präpolymer unter Abspaltung von Alkohol miteinander vernetzt werden.

Des Weiteren betrifft die Erfindung einen Haftklebeartikel, wie ein Klebeband oder ein Etikett, umfassend einen Träger, auf den zumindest einseitig ein Haftklebstoff auf der Basis eines silanmodifizierten Polymers, welcher mindestens ein silylhaltiges Polymer, mindestens ein kompatibles klebrig machendes Harz und mindestens einen Katalysator enthält, in Form einer Klebstoffmasse aufgetragen ist. Im Rahmen der Anmeldung schließt dabei also der allgemeinere Begriff des Haftklebeartikels neben Klebebändern, die der Länge nach bandförmig geschnitten werden, also bei denen die Länge ein Vielfaches der Breite ist, auch entsprechende Stanzteile und insbesondere Etiketten mit ein, bei denen Länge und Breite etwa in der gleichen Größenordnung liegen.

Heute gebräuchliche Haftklebstoffe bestehen üblicherweise aus Kautschuk- oder Acrylatsystemen, die aus verschiedenen Matrices appliziert werden können: als wässerige Dispersionen, aus Lösungen, in organischen Lösungsmitteln oder als 100-%-System. Diese Haftklebstoffe werden überwiegend aus Natur- oder Synthesekautschuk oder aus Polyacrylaten hergestellt. Kautschukklebstoffe bestehen aus Polyisopren bzw. Blockcopolymeren aus Styrol und Isopren bzw. Butadien und benötigen zur Erlangung haftklebriger Eigenschaften die Abmischung mit Harzen. Zumeist werden noch zusätzlich Mineralöl als Weichmacher und/oder anorganische Füllstoffe oder Pigmente wie Kreide, Zinkoxid oder Titandioxid zugegeben. Acrylathaftklebstoffe bestehen in der Regel aus einem Copolymerisat verschiedener Ester der Acrylsäure. Üblich sind insbesondere 2-Ethylhexylacrylat und n-Butylacrylat.

Alle diese bekannten Klebstoffe haben jeweils bestimmte Vor- und Nachteile, so dass es keinen universellen Haftklebstoff gibt. Lösungsmittelbasierte Klebstoffe (englisch: Solvent Based Pressure Sensitive Adhesives - SBPSA), insbesondere Acrylate, weisen zwar hinsichtlich ihrer Klebeeigenschaften viele Vorteile auf, sind aber z. B. vergleichsweise weniger umweltfreundlich, da das Lösungsmittel nachbehandelt bzw. rezykliert werden muss.

Silanmodifizierte Polymere (englisch: Silane Modified Polymers - SMP) oder auch organofunktionelle Silane sind hybride Verbindungen, die in einem Molekül die Funktionalität einer reaktiven organischen Gruppe mit der anorganischen Funktionalität eines Alkylsilikats verbinden. Sie werden bisher vor allem im Bereich der Kleb- und Dichtstoffe eingesetzt. Unter Feuchtigkeitseinwirkung bilden diese ein elastisches Netzwerk aus, welches auch als Basis für Haftklebstoffe zur Verwendung bei Etiketten und Klebebändern benutzt werden kann. Silanmodifizierte Polymere erfüllen, insbesondere bei ihrer Verarbeitung, sowohl technisch als auch ökologisch alle Anforderungen an moderne Kleb- und Dichtstoffe. So ermöglichen diese Hybridbindemittel die Formulierung von gesundheitlich unbedenklichen Kleb- und Dichtstoffen, die lösemittel-, isocyanat- und auch zinnfrei sein können. Eine niedrige Viskosität der Präpolymere ermöglicht eine einfache Verarbeitung und eröffnet einen breiten Spielraum zur Formulierung von Kleb- und Dichtstoffen mit ausgezeichneten mechanischen Eigenschaften. Aufgrund der hohen Vernetzungsgeschwindigkeit härten die Endprodukte auch rasch und vollständig durch. Darüber hinaus wird ohne Primer eine exzellente Haftung auf verschiedensten Trägermaterialien erzielt. Während bei Dichtstoffen nach Abschluss der Vernetzungsreaktion in der Regel keine Klebwirkung mehr erforderlich ist, müssen Haftklebstoffe stattdessen permanent klebrig bleiben. Insofern bestehen differenzierte Anforderungsprofile an Dichtstoffe und Haftklebstoffe, so dass die Eignung eines bestimmten silanmodifizierten Polymers als Dichtungsmittel nicht zwangsläufig bedeutet, dass dieses silanmodifizierte Polymer auch als Haftklebstoff eingesetzt werden kann.Grundsätzlich können unter Einwirkung von Feuchtigkeit und/oder Wärme aus silanmodifizierten Präpolymeren darin befindliche Silanol-Gruppen hydrolisiert werden und anschließend unter Alkoholabspaltung und Metallkatalyse ein Netzwerk bilden, die klassische Dichtmasse. Erwünschte haftklebrige Eigenschaften lassen sich dann z. B. durch den Zusatz von geeigneten Harzsystemen erhalten, deren Einsatz allerdings oftmals durch eine reduzierte Kompatibilität mit dem Polymer eingeschränkt ist.

In den 1980-iger Jahren wurde diesbezüglich, insbesondere von der Firma Kaneka, die Technologie der Herstellung und Verarbeitung der sogenannten MS-Polymere, beschrieben (z. B. EP 0 295 330 A2 und EP 0 106 330 B1). Im Zuge der Weiterentwicklung dieser Technologie sind bis in die letzten Jahre hinein weitere Patentanmeldungen veröffentlicht worden, die sich auf verschiedene Variationen der Zusammensetzung in der Polymerkette beziehen. Durch Abmischung mit kompatiblen klebrig machenden Harzen (Tackifiern) können aus silanmodifizierten Polymeren Haftklebstoffe hergestellt werden. Dies kann allerdings auf Kosten der Kohäsion gehen, so dass die resultierenden Produkte oftmals die benötigten Scherfestigkeiten nicht mehr erreichen. Übliche Rezepturen beinhalten Mischungen von 20 % - 80 % Präpolymeren mit entsprechenden Anteilen kompatibler Harze. Bevorzugte Beispiele verwenden die Komponenten Präpolymer zu Harz in einem Verhältnis von etwa 1:1.

Aus der DE 20 2014 104 045 U1 ist ein Haftklebstoff auf der Basis eines silanmodifizierten Polymers und ein entsprechender Haftklebeartikel, insbesondere ein Klebeband, bekannt. Dieses technische Klebeband eignet sich für insbesondere Anwendungen im Baubereich und weist einen bandförmigen Träger sowie eine auf zumindest einer Seite des Trägers aufgebrachte druckempfindliche sowie vernetzbare Klebebeschichtung auf, welche ein spezifisches Flächengewicht von mehr als 100 g/m² hat. Die Klebebeschichtung setzt sich zunächst aus folgenden Bestandteilen zusammen: a) 20 Gew.-% bis 85 Gew.-% eines Polyurethans oder Polyethers; b) 15 Gew.-% bis 85 Gew.-% eines mit der Komponente a) verträglichen Klebeharzes und c) 0,01 Gew.-% bis 3 Gew.-% eines Vernetzungsmittels. Die Klebebeschichtung soll dabei insgesamt vorzugsweise wärmevernetzbar ausgebildet sein. Unter diesem Aspekt hat es sich als günstig erwiesen, wenn das eingesetzte Polyurethan bzw. Polyether Silan enthält. In der konkreten Zusammensetzung weist dann eine solche Komponente vom Typ eines hydrolysierbaren Alkoxysilans im Regelfall zwei endständige silanhaltige Gruppen auf.

Die US 2015/0030848 A1 beschreibt ein Verfahren zur Herstellung eines atmungsaktiven Selbstklebeartikels. Es wird ganz allgemein beansprucht, diesen Selbstklebeartikel unter Verwendung einer Klebstoffzusammensetzung herzustellen, die a) mindestens ein silylhaltiges Polymer, b) mindestens ein kompatibles klebrig machendes Harz und c) mindestens einen Katalysator enthält. Die Gewichtsprozente der einzelnen Komponenten teilen sich dabei bevorzugt wie folgt auf: a) 20 Gew.-% bis 85 Gew.-%, b) 15 Gew.-% bis 80 Gew.-%, c) 0,01 Gew.-% bis 3 Gew.-%. Das silylhaltige Polymer besteht aus Polyurethan oder Polyether oder ist ein Kopolymerisat aus Polyurethan- und Polyether-Blöcken. Als geeignete klebrig machende Harze werden phenolmodifizierte Terpenharze, Kohlenwasserstoffharze, Rosinesterharze, Acrylharze und deren Mischungen genannt.

Die US 2015/0175849 A1 betrifft ein Verfahren zur Heißauftragung einer silanmodifizierten Klebstoffzusammensetzung auf einen Träger. Hierbei kommt ein System zur Anwendung, das eine Düse zum Auftragen der Klebstoffzusammensetzung umfasst, sowie eine Leitung, um die Düse mit der in fließfähiger Form aufzubringenden Klebstoffzusammensetzung zu versorgen. Des Weiteren umfasst das System einen Mischer zur Homogenisierung der Hauptbestandteile der Mischung der Klebstoffzusammensetzung. Diese Hauptbestandteile umfassen dabei a) ein silyliertes Präpolymer, b) ein kompatibles klebrigmachendes Harz und c) einen Vernetzungskatalysator. Die Gewichtsprozente der einzelnen Komponenten teilen sich dabei bevorzugt wie folgt auf: a) 20 Gew.-% bis 85 Gew.-%, vorzugsweise 30 Gew.-% bis 75 Gew.-%; b) 15 Gew.-% bis 80 Gew.-%, vorzugsweise 25 Gew.-% bis 70 Gew.-%; c) 0,01 Gew.-% bis 3 Gew.-%, vorzugsweise 0,1 Gew.-% bis 2 Gew.-%. Sie entsprechen damit der Zusammensetzung gemäß der vorstehend genannten US 2015/0030848 A1, die vom gleichen Anmelder stammt, bzw. auch der Haftklebstoff-Zusammensetzung gemäß der DE 20 2014 104 045 U1.

Auch in der US 2015/0184045 A1, in der US 2015/0184043 A1 und in der WO 2015/024773 A1 werden Massen auf der Basis von silanvernetzenden, insbesondere alkoxysilanterminierten, Präpolymeren sowie Verfahren zu deren Herstellung und deren Verwendung als Kleb- und Dichtstoffe beschrieben. Insbesondere werden Polymersysteme genannt, die über die endständigen reaktiven Alkoxysilylgruppen bei Kontakt mit Wasser bzw. Luftfeuchtigkeit bereits bei Raumtemperatur in der Lage sind, unter Abspaltung der Alkoxygruppen miteinander zu kondensieren. Es wird ausgeführt, dass es bei Präpolymer-Einkomponenten-Systemen von silanvernetzenden Präpolymeren nachteilig sei, dass die Präpolymere nur eine geringe Reaktivität gegenüber Feuchtigkeit aufweisen, was eine aggressive Katalyse erforderlich mache.

Haftklebstoffe der eingangs beschriebenen Art, die aus silanvernetzenden, insbesondere alkoxysilanterminierten, Präpolymeren hergestellt sind, bleiben hinter den klebetechnischen Anforderungen zurück, welche von marktüblichen Haftklebstoffen, die z. B. auf der Basis von aus einer Lösungsmittelmatrix abgeschiedenen Polyacrylaten hergestellt sind, ohne Weiteres erfüllt werden.

Die Dokumente EP 2 055 741 A1 und JP 2008 045059 A offenbaren Verfahren der eingangs genannten Art.

Im erstgenannten Dokument ist eine härtbare Zusammensetzung offenbart, die als Haftklebstoff verwendet werden kann. Dabei wird eine vernetzte Masse aus einer Zusammensetzung hergestellt, die zwei silanmodifizierte Polymere und mindestens einen Katalysator enthält. Gemäß einem Beispiel (Beispiel 12) kann eine derartige härtbare Zusammensetzung einen Katalysator und eine Mischung eines Oxyalkylenpolymers und eines (Meth)acrylpolymers, die reaktive siliciumhaltige Gruppen aufweisen, enthalten. Das Polyether-Präpolymer weist eine Methyldimethoxysilyl-Gruppe als endständige Gruppe auf, und das Polymer auf Acrylatbasis enthält Propyltriethoxysilan in seitenständigen Ketten.

Im zweitgenannten Dokument ist eine - u. a. durch durch ihr Herstellungsverfahren gekennzeichnete - härtbare Zusammensetzung offenbart, die ein Oxyalkylenpolymer enthält, das eine reaktive siliciumhaltige Gruppe aufweist, und die des Weiteren ein (Meth)acrylpolymer enthält, das ebenfalls eine reaktive siliciumhaltige Gruppe aufweist. Gemäß einem Beispiel (Beispiel 4) ist das Oxyalkylenpolymer ein Polyether-Präpolymer, das endständig Trimethoxysilyl-Gruppen aufweist, und das (Meth)acrylpolymer enthält Propyltriethoxysilan als seitenständige Ketten. Außerdem ist in der Zusammensetzung ein Katalysator enthalten.

Schließlich offenbart auch die US 4 652 610 A eine härtbare Zusammensetzung, die als Haftklebstoff verwendet werden kann. Die Zusammensetzung umfasst zwei siliciumhaltige Polymere, die endständig und/oder in der Seitenkette hydrolysierbare Silanol-Gruppen aufweisen. Insbesondere wird ein Polymer durch die Reaktion von einem mercaptofunktionellen Harz und einem Vinyltriethoxysilan in Gegenwart eines radikalischen Initiators hergestellt. Weiter offenbart Beispiel 4 einen Haftklebstoff, der durch die Vernetzung einer Zusammensetzung erhältlich ist, die einen Katalysator und eine Mischung von zwei silanmodifizierten Polymeren enthält, wobei ein Polymer durch die Reaktion mit einem Vinyltrimethoxysilan und das zweite durch die Reaktion mit einem 3-Methacryloxypropyltrimethoxysilan hergestellt wird.

Ein weiteres Problem besteht darin, dass darüber hinaus bei der Herstellung der vorstehend beschriebenen Haftklebstoffe, die in der Regel - wie auch aus den drei vorstehend genannten Dokumenten hervorgeht - aus methoxysilierten Präpolymeren hergestellt werden, während des Vernetzens toxisches Methanol abgespalten wird. Das Methanol tritt in der Abluft des Prozesses auf und muss entweder behandelt oder unter den kritischen MAK-Wert von 270 mg/m³ Luft über 8 Stunden (MAK = Richtwert für die maximale Arbeitsplatzkonzentration) bzw. unter den in Deutschland erlaubten VOC-Wert von 20 mg/m³ Methanol für (VOC - volatile organic compounds, flüchtige organische Verbindungen) gebracht werden. Bei einer durchschnittlichen Freisetzung von 0,6 Ma.-% Methanol und einem Auftragsgewicht von 100 g Klebstoff pro m², der typisch für Klebebänder ist, entstehen im Beschichtungsprozess 300 mg/m² Methanol, wenn von einer Rezeptur mit 50 Ma.-% Harzanteil ausgegangen wird. Daher ist eine Filtration oder entsprechende Verdünnung der Abluft unter Einsatz einer dafür notwendigen Sensorik unabdingbar. Schließlich liegt die untere Explosionsgrenze von Methanol in Luft bei 6 Vol.-%, weshalb auch aus Sicherheitsgründen eine Konzentrationskontrolle notwendig und eine Methanolanreicherung in der Luft zu vermeiden sind.

Der Erfindung liegt das Problem zugrunde, ein Verfahren der eingangs genannten Art zur Herstellung eines Haftklebstoffs auf der Basis eines silanmodifizierten Polymers zu schaffen, durch das eine Methanolanreicherung in der Luft minimiert wird, wobei der Haftklebstoff sowie auch ein Haftklebeartikel der eingangs genannten Art hohe klebetechnische Anforderungen erfüllt, wobei insbesondere die Klebeeigenschaften von SBPSA erreicht werden sollen.

Das der Erfindung zugrunde liegende Problem wird dadurch gelöst, dass das erste, silanmodifizierte, an der Kette seitenständig ethoxysilierte Präpolymer ein längerkettiges Präpolymer ist als das zweite, kürzerkettige, an der Kette endständig und/oder seitenständig ethoxysilierte und/oder methoxysilierte Präpolymer, wobei die Kettenlänge als eine Gesamtkettenlänge aus der Hauptkette und - wenn vorhanden - aller Seitenketten verstanden wird und der Gesamtkettenlänge die jeweilige molare Masse des Präpolymers entspricht, wobei der Gesamtanteil von silanmodifizierten methoxysilierten Präpolymeren im Gemisch der kettenförmigen silanmodifizierten alkoxysilierten Präpolymere höchstens 50 Ma.-% beträgt.

Durch den erfindungsgemäßen Einsatz des ersten an der Kette seitenständig - im Folgenden auch mit dem Begriff "lateral" bezeichnet - ethoxysilierten Präpolymers im Gemisch der silanmodifizierten Präpolymere entsteht bei dessen Vernetzung an der Stelle des toxischen Methanols als Spaltprodukt der Vernetzung ein weniger kritisches alkoholisches Nebenprodukt, nämlich Ethanol. Für Ethanol ist ein deutlich höherer MAK-Wert von 960 mg/m³ verbindlich. Erfindungsgemäß wird so eine ökologiefreundliche Verarbeitung des Präpolymersystems gewährleistet, ohne dass dazu eine aufwändige Mess- und Regeltechnik in den Beschichtungsanlagen für die erfindungsgemäßen Haftklebeartikel vorgesehen werden müsste.

Durch den alleinigen Einsatz von langkettigen seitenständig silanmodifizierten ethoxysilierten Präpolymeren, also den direkten Ersatz der bekannten langkettigen endständig silanmodifizierten methyloxysilierten Präpolymere, würde man jedoch nur Klebstoffe mit nur moderater Klebrigkeit und nahezu keiner Kohäsion erhalten, welches beim Abzug vom Substrat zum Klebstoffübertrag führt. Darüber hinaus ist auch bekanntermaßen die Vernetzungsgeschwindigkeit von ethoxysilierten Präpolymeren deutlich niedriger als von methyloxysilierten Präpolymeren, was zu einer schwer zu kontrollierenden und letztendlich unwirtschaftlichen Produktion führen würde.

Dieses Problem wird erfindungsgemäß durch die Präsenz des zweiten, insbesondere kürzerkettigen, silanmodifizierten, an der Kette ethoxysilierten und/oder methoxysilierten Präpolymers vermieden. Unter "kürzerkettig" wird dabei einerseits verstanden, dass die Kettenlänge kleiner ist als die Kettenlänge des "längerkettigen" ersten Präpolymers, wobei der Polymerisationsgrad vorzugsweise um mindestens zwei Zehnerpotenzen differieren sollte. Derartige kürzerkettige, silanmodifizierte, an der Kette ethoxysilierte und/oder methoxysilierte Präpolymere, die auch im Gemisch miteinander eingesetzt werden können, weisen charakteristischerweise eine Kettenlänge von weniger als 10 K (10000 g/mol) auf, während im Vergleich dazu die Kettenlänge des ersten Präpolymers bei 10 K bis oder 24 K, vorzugsweise bei 12 bis 20 K, besonders bevorzugt von 14 K bis 18 K liegen kann. Das zweite Präpolymer kann auch eine Kettenlänge von weniger als 14 K aufweisen, wobei eine Kettenlänge von weniger als 8 K besonders bevorzugt ist. Hinsichtlich der beispielsweise in einschlägigen Herstellerdatenblättern verwendeten Bezeichnung "K" für die Kettenlänge ist darauf hinzuweisen, dass diese nicht die direkte Bezeichnung für die Kettenlänge ist, sondern eine indirekte Angabe für die Kettenlänge, welche einer bestimmten molaren Masse entspricht. 1 K entspricht einer molaren Masse von 1000 g/mol. Als eine Gesamtkettenlänge, der die jeweilige molare Masse entspricht, ist dabei die Summe der molaren Masse der Hauptkette und - wenn vorhanden - aller Seitenketten anzusehen. So kann mindestens eines der beiden Präpolymere, oder es können auch beide Präpolymere, aus verzweigten oder unverzweigten Kettenmolekülen bestehen, wobei die endständige und/oder seitenständige Silanmodifizierung in einem verzweigten Molekül an einer Seitenkette und/oder an der Hauptkette vorliegen kann.

Bei den anmeldungsgemäß angegebenen Molekularmassen (Synonyme: Molmasse, molare Masse) handelt es sich, wie bei Polymeren üblich, um eine mittlere molare Masse. Hier gibt es eine Unterscheidung zwischen Mₙ (Zahlenmittel), Mw (Gewichtsmittel) und Mz (Zentrifugenmittel). Dabei gilt immer, dass Mₙ < M_{w} < Mz ist. Letztlich basiert diese Unterscheidung nur auf verschiedenen statistischen Methoden, um die Verteilung der molaren Masse zu beschreiben. Gleich sind diese Werte nur in dem theoretischen Fall, dass alle Moleküle tatsächlich die gleiche Molmasse haben und keine Verteilung vorliegt. Bei den in den Prospekten der verschiedensten Hersteller enthaltenen Angaben handelt es sich in der Regel um das Zahlenmittel Mₙ, welches die bei weitem üblichste Angabe zur Charakterisierung eines solchen Mittelwertes ist. Durch Quotientenbildung M_{w}/Mₙ lässt sich dabei die so genannte Polydispersität D berechnen, welche ein Maß für die Breite der Molmassenverteilung ist. Die Art und Breite der Molmassenverteilung erscheinen für die Erfindung nicht von Bedeutung, da sie sich technisch bedingt im Herstellungsverfahren stets in ähnlicher Form einstellen.

Die molare Masse kann beispielsweise nach der Norm DIN EN ISO 16014-5:2012-10 Kunststoffe - Bestimmung der durchschnittlichen Molmasse und der Molmassenverteilung von Polymeren mittels Gelpermeationschromatographie - Teil 5: Lichtstreudetektionsverfahren (ISO 16014-5:2012); Deutsche Fassung EN ISO 16014-5:2012 bestimmt werden Die Norm legt ein allgemeines Verfahren zum Bestimmen der durchschnittlichen Molmasse und der Molmassenverteilung von Polymeren durch GPC-LS, das heißt Gelpermeationschromatographie (GPC), gekoppelt mit Messung durch Lichtstreuung (LS), fest. Die durchschnittliche Molmasse und die Molmassenverteilung werden aus den Daten für die Molmasse und die Massenkonzentrationen berechnet, die kontinuierlich mit der Elutionszeit bestimmt werden. Die Molmasse bei jeder Elutionszeit wird als Absolutwert bestimmt, indem ein Detektor für die Lichtstreuung mit einem Konzentrationsdetektor kombiniert wird. Die GPC-LS wird deshalb als ein absolutes Verfahren klassifiziert.

Ein weiteres Verfahren, um die molare Masse zu bestimmen, ist in der DIN EN ISO 4629-2:2016-12 Bindemittel für Beschichtungsstoffe - Bestimmung der Hydroxylzahl - Teil 2: Titrimetrisches Verfahren mit Katalysator (ISO 4629-2:2016); Deutsche Fassung EN ISO 4629-2:2016 beschrieben. Die Hydroxylzahl (OHZ) ist ein Maß für den Gehalt an Hydroxygruppen in organischen Materialien, z. B. in Harzen, Lacken, Polyesterolen, Fetten und Lösungsmitteln. Bei bekannter molekularer Struktur kann aus der Hydroxylzahl die molare Masse berechnet werden. Es gibt mehrere unterschiedliche genormte Verfahren zur Bestimmung der Hydroxylzahl von Harzen. Das klassische Verfahren mit Verwendung von Pyridin ohne Katalysator ist in ISO 4629-1 festgelegt. Die Vorteile des Verfahrens mit Katalysator sind folgende: die verwendeten Lösemittel sind weniger gesundheitsschädlich, der Lösemittelverbrauch ist geringer, das Verfahren ist wegen kürzerer Reaktionszeiten schneller, der Umschlagpunkt der Titration ist besser erkennbar, Polyole sind schneller löslich.

Die Ergebnisse der einzelnen Bestimmungsverfahren differieren nur in einer für die Erfindung unkritischen Weise voneinander.

Das freie Ende der, aus linear endständigen oder lateral silanmodifizierten, vorzugsweise methoxysilierten, Polymereinheiten gebildeten Moleküle der Präpolymere unterstützt den amorphen Charakter des ausgehärteten Klebstoffs und erhöht dadurch die Klebrigkeit, ohne auf Kosten der Kohäsion zu gehen.

Mit der kürzeren Kettenlänge geht auch eine geringere Viskosität des zweiten Präpolymers gegenüber dem ersten Präpolymer einher. Als zweite Präpolymere können dabei Verbindungen eingesetzt werden, die als sogenannte Reaktivverdünner bekannt sind. Für den Fachmann überraschend konnte gefunden werden, dass beim gemeinsamen Einsatz von seitenständigen Präpolymeren, mit diesen Reaktivverdünnern vergleichbare Reaktions- und Vernetzungsgeschwindigkeiten wie mit den reinen beidseitig endständig substituierten Präpolymeren erzielt werden konnten. Wie bereits ausgeführt, können mit Vorteil aber auch zusammen mit den genannten Reaktivverdünnern (im Weiteren auch: "Booster") oder diese ersetzend endständig substituierte Präpolymere im zur Vernetzung bestimmten Präpolymerengemisch eingesetzt werden. Es ist auch hervorzuheben, dass insbesondere durch die ethoxylierten silanmodifizierten Polymere in der erfindungsgemäßen Polymermischung in Kombination mit den "Boostern" der Nachteil einer - im Vergleich zu den methoxylierten Rohstoffen - langen Reaktionszeit nicht mehr auftritt.

Bei dem ersten Präpolymer oder dem zweiten Präpolymer oder den Präpolymeren der Mischung kann es sich um Polyurethane und/oder Polyether mit ein, zwei oder drei Gruppen vom Mono-, Di- oder Trialkoxysilan-Typ handeln.

Dabei kann auch der sogenannte α-Effekt genutzt werden, um die Reaktionsträgheit eines lateral substituierten ersten Präpolymers auszugleichen. Darunter wird Folgendes verstanden. Bekannte organofunktionelle Silane sind zumeist Trialkoxysilane mit einer Propylenbrücke zwischen dem Si-Atom und einer an diesem angebundenen weiteren funktionellen Gruppe X. Als funktionelle Gruppen X sind insbesondere Amino-, Glycidoxy-, Schwefel- und Methacryloxy-Gruppen von Bedeutung. Durch einen Ersatz der Propylenbrücke durch eine Methylenbrücke wird eine extrem erhöhte Reaktivität der Si-Alkoxygruppen erzielt. Diese resultiert aus einer elektronischen Wechselwirkung der funktionellen Gruppe X mit dem Si-Atom, die nur in dieser α-Stellung beobachtet wird, weswegen man vom sogenannten α-Effekt und α-Chemie spricht. Z. B. aktiviert die Nachbarschaft eines elektronegativen Donors, wie Stickstoff oder Sauerstoff in α-Stellung zum Silicium-Atom, also nur durch eine Methylenbrücke davon getrennt, die Alkoxyfunktionen am Silicium-Atom. Diese sind damit gegenüber Nucleophilen reaktiver. Bei Zutritt von Wasser heißt das, dass sie schneller hydrolysieren. Im Gegensatz zu den etablierten Standardsilanen mit Propylenspacer (γ-Silane) stellen bei den α-Silanen neben den Trialkoxy- auch die Dialkoxysilane wichtige Bausteine der zu synthetisierenden Polymere dar. Durch den Einsatz von difunktionellen Silanen kann beispielsweise bei der Vernetzung eine gezielte Einstellung der Vernetzungsdichte erfolgen. Außerdem führt der α-Effekt zu einer geringeren Reaktivitätsdifferenz zwischen Methoxy- und Ethoxy-Silylgruppen. Damit wird es noch besser - wie erfindungsgemäß vorgesehen - möglich, Methoxysilane durch Ethoxysilane zu ersetzen, ohne gleichzeitig die Anwendungseigenschaften zu verschlechtern, wobei die bei der Kondensation erfolgende Freisetzung von Methanol minimiert wird. Dabei bestehen gleichzeitig Vorteile gegenüber den Kautschuk-Hotmelts im Bereich der gesteigerten Temperatur- und Lösungsmittelbeständigkeit.

Es wurde bereits ausgeführt, dass unterschiedliche zweite kürzerkettige, silanmodifizierte, an der Kette ethoxysilierte und/oder methoxysilierte Präpolymere im Gemisch eingesetzt werden können. Gleiches gilt auch für das erste, längerkettige, silanmodifizierte, seitenständig an der Kette ethoxysilierte Präpolymer. Auch hier kann ein Gemisch unterschiedlicher erster Präpolymere vorliegen.

Insbesondere kann es im Rahmen der Erfindung auch vorgesehen sein, dass das Gemisch zur Herstellung des Haftklebstoffes - zusätzlich zu den zweiten kürzerkettigen Präpolymeren - längerkettige endständig silanmodifizierte alkoxysilierte, insbesondere methoxysilierte und/oder ethoxysilierte, Präpolymere enthält. Der Anteil von längerkettigen, endständig silanmodifizierten alkoxysilierten Präpolymeren sollte dabei bevorzugt kleiner sein als 15 Ma.-% der gesamten Masse aus Präpolymeren, Harzen, Katalysator und gegebenenfalls vorhandenen weiteren Inhaltsstoffen.

Im Falle der Methoxylierung des ersten oder zweiten Präpolymers oder des weiteren längerkettigen Präpolymers steigt dabei zwar die Freisetzung von Methanol während der Vernetzung über 0 % an, jedoch kann diese derart begrenzt werden, dass gegenüber den eingangs genannten bekannten Verfahren das freigesetzte Methanol immer noch um 75 % reduziert werden kann. Im Sinne dieser Minimierung liegt der Gesamtanteil von silanmodifizierten methoxysilierten Präpolymeren im Gemisch der kettenförmigen silanmodifizierten alkoxysilierten Präpolymere (ohne Harze und Katalysator sowie ggf. weitere Additiva) erfindungsgemäß bei höchstens 50 Ma.-%.

Der entstehende erfindungsgemäße SMP-Haftklebstoff vereinigt dabei hohe Klebkräfte mit hohen Scherfestigkeiten und erfüllt damit hohe klebetechnische Anforderungen, welche in den gleichen Größenbereichen liegen, wie sie von den Klebeeigenschaften von SBPSA bekannt sind. Die mit den erfindungsgemäß hergestellten Haftklebstoffen erzielten Klebkräfte dokumentieren eine bessere Adhäsion auf verschiedenen Untergründen, auch auf niederenergetischen Oberflächen, als mit den bekannten Rohstoffen zu erreichen sind, sowie aufgrund der niedrigeren Viskosität beim Einsatz von kürzerkettigen zweiten Präpolymeren eine leichtere Verarbeitbarkeit. Die Kohäsion übertrifft dabei ebenfalls die Ergebnisse der Patentanmeldungen des Standes der Technik. In Kombination mit guten Klebkräften werden hohe Scherfestigkeiten erreicht, die bei 70 °C größer sind als 10000 min. Aufgrund der lateralen Vernetzungspunkte ergibt sich eine bessere Quer- und Durchvernetzung, wobei die intermolekularen Verknüpfungen zu einem dichten Netzwerk mit einer entsprechend hohen inneren Festigkeit führen.

Es gelingt demnach, durch gezielte Variation der eingesetzten Präpolymer-Rohstoffe einen an unterschiedliche Anwendungsfälle bzw. Anforderungen angepassten Haftklebstoff herzustellen, welcher die technischen Eigenschaften übertrifft, die mit den bekannten Rezepturen erzielbar sind, wobei gleichzeitig aber im Vernetzungsprozess ein signifikant geringerer Anteil des toxischen Methanols abgespalten wird.

Weitere vorteilhafte Ausführungen der Erfindung sind in den Unteransprüchen und der nachfolgenden speziellen Beschreibung enthalten.

In den nachstehend aufgeführten Ausführungsformen der Erfindung werden verschiedene, erfindungsgemäß bevorzugte Haftklebstoff-Rezepturen vorgestellt, die sich insbesondere durch die Natur der silanmodfizierten Komponente in der Haftklebstoffmasse unterscheiden. Diese Rezepturen werden jeweils Vergleichsrezepturen gegenübergestellt. Dabei waren u. a. als Ausgangsstoffe die in der nachstehenden Tabelle 1 genannten Rohstoffe geeignet.

Hierzu kann Folgendes erklärend angemerkt werden.

Tegopac Seal 100 ist ein Präpolymer, bei dem die alkoxyfunktionellen Silangruppen, insbesondere Ethoxgruppen, nicht terminal in das Gerüst des Polymers eingebaut sind, sondern gezielt seitenständig verteilt über die Kette des Grundgerüstes, wobei sich die seitenständig alkoxyfunktionellen Silangruppen insbesondere an den Enden der Ketten befinden. Über die über die Molekülkettenlänge verteilt eingebauten Vernetzungseinheiten können wichtige Eigenschaften, wie die Vernetzungsdichte, gesteuert werden. Tegopac Seal 100 weist somit neben dem Vorteil der Ethanolabspaltung die Eigenschaft auf, dass aufgrund der Seitenkettensubstitution eine leichtere dreidimensionale Vernetzung erfolgen kann, welche zu einem sehr dichten Netzwerk und daher zu einer hohen Scherfestigkeit führt. Es hat eine kinematische Viskosität von 55 Pas bei 23 °C. Tegopac Seal 100 hat eine Kettenlänge im Bereich von 12 K bis 18 K, im Mittel von 15 K.

**Tabelle 1: Eingesetzte Rohstoffe und deren chemische Natur**

| Handelsname | Lieferant | Chemische Natur | Wirkung als |
|---|---|---|---|
| Tegopac Seal 100 | Evonik | Ethoxysiliertes Silan, endständig lateral, Polypropylenglykol | Erstes Präpolymer |
| Polymer ST 61 | Evonik | Silan modifiziertes Polyurethan-Polyether Copolymer, endständig linear | Zweites Präpolymer längerkettig |
| Polymer ST 61 LV | Evonik | Silan modifiziertes Polyurethan-Polyether Copolymer, endständig linear | Zweites Präpolymer längerkettig |
| Tegopac RD 1 | Evonik | Ethoxysiliertes, endständig lateral silanmodifiziertes Präpolymer | Zweites Präpolymer kürzerkettig |
| Tegopac RD 2 | Evonik | Ethoxysiliertes endständig lateral silanmodifiziertes Präpolymer | Zweites Präpolymer kürzerkettig |
| Dynasylan AMMO | Evonik | 3-Aminopropyltrimethoxysilan | Vernetzer/Haftvermittler |
| Geniosil GF 9 | Wacker | N-(2-Aminoethyl)-3-aminopropyltrimethoxysilan | Vernetzer/Haftvermittler |
| Geniosil GF 96 | Wacker | 3-Aminopropyltrimethoxysilan | Zweites Präpolymer Vernetzer/Haftvermittler |
| Dynasylan VTMO | Evonik | Vinyltrimethoxysilan | Wasserfänger |
| Geniosil XL 10 | Wacker | Vinyltrimethoxysilan | Wasserfänger |
| Geniosil XL 70 | Wacker | Phenyltrimethoxysilan | Wasserfänger |
| TibKat 216 | TIB-Chemicals | Zinn-Katalysator | Katalysator |
| Lupragen N 700 | BASF | Zinn freier Katalysator | Katalysator |

Tegopac RD1 und RD2 (sogenannte Reaktivverdünner oder "Booster") sind Präpolymere mit mehrfach lateral an der Polymerkette befindlichen endständigen Ethoxysilyl-Gruppen. Die Viskositäten bei 23 °C liegen bei 1 Pas für RD1 und 1,5 Pas für RD2. Tegopac RD1 und RD2 haben eine Kettenlänge im Bereich von 4 K bis 7 K, im Mittel von 5,5 K.

Anstelle dieser Präpolymere können als zweites Präpolymer auch GENIOSIL® XM 20 oder XM 25 einzeln oder im Gemisch eingesetzt werden. Dabei handelt es sich um kürzerkettige Präpolymere der Firma Wacker mit einer einseitig endständig durch eine Methoxygruppe verkappten Silangruppe. Die Produkte mit den methoxysilierten Silanfunktionen sind wie Tegopac RD1 und RD2 linear aufgebaut, allerdings ist nur eine Seite funktionell endständig abgesättigt, während das zweite Ende der Kette in der Regel aus einem Kohlenwasserstoffrest besteht. GENIOSIL® XM 20 zeigt dabei den α-Effekt und ist difunktional, während XM 25 trifunktional ist und der Y-Chemie zuzuordnen ist. Die Länge der Kette von XM 25 ist größer als die von XM 20.

Bei der Mischung bzw. Lagerung der Präpolymere ist es erforderlich, zur Erhöhung der Lagerstabilität bzw. der Reaktionssteuerung einen gewissen Anteil eines Wasserfängers, 0,1 % - 5 % der Art Vinyltrimethoxysilan oder Phenyltrimethoxysilan (Dynasylan VTMO, GENIOSIL® XL 10 oder GENIOSIL® XL70), einzusetzen. Hierdurch wird die Hydrolyse soweit gebremst, dass eine Vernetzung nicht schon bei der Mischung stattfindet. Weiterhin wird durch den Einsatz des Wasserfängers die Lagerstabilität erhöht.

Der Einsatz von Haftvermittlern auf Basis eines 3-Aminopropyltrimethoxysilanes oder eines N-(2-Aminoethyl)-3-amino-propyltrimethoxysilan zeigt bei Einsatzmengen von 0,1 % - 2 % haftungsverstärkende Eigenschaften auf verschiedenen Untergründen, insbesondere auch auf niederenergetischen Oberflächen.

Zur Steuerung der Vernetzungsgeschwindigkeit ist es ebenfalls erforderlich, auf den Einsatz von Katalysatoren in Mengen von 0,05 Ma.-% - 0,3 Ma.-% - bezogen auf die Gesamtrezeptur - zurückzugreifen. Metallkatalysatoren enthalten dabei insbesondere Zinn-, Titan- oder Zirkoniumverbindungen, wie z. B. der titanhaltige Katalysator Tyzor TPT der Firma DuPont oder Tyzor NPZ der gleichen Firma, welcher Tetraalkylzirkonat enthält, oder Tyzor AA75, welcher Titaniumacetylacetonat enthält (ebenfalls von DuPont). Organische Säuren oder Ester wie Butylphosphat oder sogenannte Koch-Säuren (tertiäre gesättigte Monocarbonsäuren) sowie heterozyklische Komponenten wie Lupragen N 700 (1,8-Diazabicyclo-5,4,0-undecen-7) kommen ebenfalls in Betracht.

Die Evonik-Polymere ST 61 und ST 61LV sind silanterminierte Polyurethane und in Bezug auf die Viskosität Analoge zu den Wacker-Polymeren GENIOSIL® STP-E 30 bzw. STP-E 10, die alternativ in gleichen Anteilen eingesetzt werden könnten, ohne dass dadurch nennenswerte Unterschiede in den resultierenden Haftklebstoffeigenschaften auftreten würden.

Bei GENIOSIL® STP-30 handelt es sich um einen Dimethoxy(methyl)silylmethyl-carbamat-terminierten Polyether mit zwei endständigen Dimethoxysilan-Gruppen, einer mittleren molaren Masse von 14493 g/mol, einer Polydispersität von etwa 1.6 und einer Menge von funktionellen Silyl-Gruppen E(t) von 0.138 Milliäquivalent bezogen auf ein Gramm des Polymers. GENIOSIL STP-E 30 ist also ein organofunktionelles Hybridpolymer auf Polyether-Basis mit insbesondere einer Viskosität von 30 Pas und einem Gehalt an Methoxygruppen im Bereich von 0,25 bis 0,3 mmol/g. Wie GENIOSIL® STP-E10 ist es ein Präpolymer, an dem der α-Effekt zu beobachten ist.

Bei GENIOSIL® STP-E10 handelt es sich um einen Dimethoxy(methyl)silylmethylcarbamat-terminierten Polyether mit zwei endständigen Dimethoxysilan-Gruppen, mit einer mittleren molaren Masse von 8889 g/mol und mit einer Polydispersität von etwa 1.6 und einer Menge von funktionellen Silyl-Gruppen E(t) von 0.225 Milliäquivalent bezogen auf ein Gramm des Polymers. Seine dynamische Viskosität bei 25 °C - gemessen nach DIN 51562 - liegt bei 10 Pas.

Die chemische Konstitution der Evonik-Präpolymer-Typen ST 61 und ST 61LV entspricht von ihrer Basis her im Gegensatz zu den Wacker-Präpolymer-Typen den Y- Silanen. Vergleichbare Wacker-Präpolymere, die Y- Silane sind, jedoch höhere Viskositäten aufweisen sind GENIOSIL® STP-E 35 und GENIOSIL® STP-E15.

GENIOSIL® STP-E 35 ist ein beidseitig silanterminiertes Polypropylenglycol, insbesondere ein Trimethoxysilylpropylcarbamat-terminierter Polyether mit einer mittleren molaren Masse von 18000 g/mol und Endgruppen der Formel -O-C(=O)-NH-(CH₂)₃-Si(OCH₃)₃.

Bei GENIOSIL® STP-15 handelt es sich um einen Trimethoxysilyl(propyl)carbamatterminierten Polyether mit zwei endständigen Trimethoxysilan-Gruppen, mit einer mittleren molaren Masse von 10000 g/mol und mit einer Polydispersität von etwa 1.6 und einer Menge von funktionellen Silyl-Gruppen E(t) von 0.200 Milliäquivalent bezogen auf ein Gramm des Polymers. Seine dynamische Viskosität bei 25 °C - gemessen nach DIN 51562 - liegt bei 15 Pas.

Die Kettenlängen der höherviskosen Produkte (STP-E 30 und STP-E 35) liegen bei ca. 18 K, während die Produkte STP-E 10 und STP-E 15 aufgrund einer Kettenlänge von 12 K niedrigviskoser sind.

In Tabelle 2 sind die Rezeptur und Eigenschaften eines Vergleichsbeispiels SMP V aufgeführt, wobei ein Haftklebeartikel durch Beschichtung einer 50 µm dicken Folie aus Polyester (PET) hergestellt wurde.

**Tabelle 2: Rezeptur und Eigenschaften Vergleichsbeispiel SMP V (ohne zweites Präpolymer)**

| Name | | SMP V |
|---|---|---|
| Tegopac Seal 100 | | 49,2 |
| Geniosil XL 10 | | 2,0 |
| Dertophene H 150 | | 48,6 |
| TibKat 216 | | 0,2 |
| Summe | | 100,0 |
| Träger | | 50 µm PET |
| Flächengewicht | g/m² | 75 |
| Klebkraft Stahl 10min | N/cm | 7,81 |
| Klebkraft Stahl 24h | N/cm | 8,37 |
| Klebkraft PE 10min | N/cm | 2,95 |
| Klebkraft PE 24h | N/cm | 5,7 |
| Klebkraft PP 10min | N/cm | 3,02 |
| Klebkraft PP 24h | N/cm | 5,69 |
| Scherfestigkeit RT 100 mm², 0,5 kg | min | < 1 |
| Scherfestigkeit 70°C 100 mm², 0,5 kg | min | < 1 |
| Scherfestigkeit RT 625 mm², 1,0 kg | min | 1 |
| Scherfestigkeit 70°C 625 mm², 1,0 kg | min | 1 |

Die Klebkräfte wurden dabei nach der Norm DIN EN 1939 bestimmt. Bei dieser DIN EN 1939 "Klebebänder - Bestimmung der Klebkraft" handelt es sich insbesondere um die Version DIN EN 1939:2003-12.

Die Scherfestigkeit wurde nach der DIN EN 1943:2003-01, "Klebebänder - Messung des Scherwiderstandes unter statischer Belastung"; deutsche Fassung EN 1943:2002, bestimmt.

In Tabelle 3 sind die Rezeptur und Eigenschaften zweier erfindungsgemäßer Beispiele SMP 1 und SMP 2(mit kürzerkettigem zweitem Präpolymer) aufgeführt, wobei ebenfalls -jedoch erfindungsgemäße - Haftklebeartikel durch Beschichtung einer 50 µm dicken Folie aus Polyester (PET) hergestellt wurden. Das Beispiel SMP 3 sieht Tegopac Seal 100 und ST 61 in der Rezeptur vor, so dass als erstes und zweites Präpolymer zwei längerkettige Präpolymere zum Einsatz kommen. Das Beispiel SMP 3 ist daher nicht erfindungsgemäß.

Wie die Tabellen 2 und 3 zeigen, wurde dabei auch in Anlehnung an die Klebkraftmessung auf Stahl nach DIN EN 1939 eine Klebkraftmessung auf Polyethylen (PE) und Polypropylen (PP) - nach 10 Minuten und nach 24 Stunden - durchgeführt.

Die Bestimmung der Scherfestigkeit wurde in Anlehnung an die DIN EN 1943 bei einer Verklebungsfläche von 625 mm² und einer statischen Belastung von 10 N bei Normklima und bei 70 °C vorgenommen.

**Tabelle 3: Rezeptur und Eigenschaften erfindungsgemäße Beispiele SMP 1, SMP 2, SMP 3 (mit zweitem Präpolymer)**

| Name | | SMP 1 | | | | SMP 2 | | | | SMP 3 | | | |
|---|---|---|---|---|---|---|---|---|---|---|---|---|---|
| Tegopac Seal 100 | | 24,2 | | | | 24,2 | | | | 24,2 | | | |
| Tegopac RD 1 | | | | | | 12,1 | | | | | | | |
| Tegopac RD 2 | | 24,2 | | | | | | | | | | | |
| Polymer ST 61 | | | | | | | | | | 24,2 | | | |
| Polymer ST 61 LV | | | | | | 12,1 | | | | | | | |
| Dynasylan AMMO | | 1,0 | | | | 1,0 | | | | 1,0 | | | |
| Dynasylan VTMO | | 2,0 | | | | 2,0 | | | | 2,0 | | | |
| Dertophene H 150 | | 48,4 | | | | 48,4 | | | | 48,4 | | | |
| TibKat 216 | | 0,2 | | | | 0,2 | | | | 0,2 | | | |
| Summe | | 100,0 | | | | 100,0 | | | | 100,0 | | | |
| Messwert | | A | B | C | Ø | A | B | C | Ø | A | B | C | Ø |
| Flächengewicht | g/m² | 90,0 | 100,0 | 101,0 | 97,0 | 54,0 | 58,0 | 48,0 | 53,3 | 143,0 | 133,0 | 135,0 | 137,0 |
| Klebkraft Stahl sofort | N/cm | 7,8 | 7,4 | 7,2 | 7,5 | 12,0 | 12,4 | 12,5 | 12,3 | 13,4 | 14,0 | 14,6 | 14,0 |
| Klebkraft Stahl 10 min | N/cm | 8,0 | 7,8 | 7,4 | 7,7 | 10,8 | 12,0 | 12,2 | 11,7 | 13,4 | 15,5 | 15,9 | 14,9 |
| Klebkraft Stahl 24 h | N/cm | 7,3 | 7,4 | 7,4 | 7,4 | 12,1 | 11,4 | 12,0 | 11,8 | 16,0 | 16,2 | 15,2 | 15,8 |
| Klebkraft PE 10 min | N/cm | 6,1 | 6,1 | 6,5 | 6,2 | 5,5 | 5,4 | 5,6 | 5,5 | 0,4 | 1,1 | 0,7 | 0,7 |
| Klebkraft PE 24 h | N/cm | 7,3 | 5,9 | 5,4 | 6,2 | 6,1 | 5,0 | 4,9 | 5,3 | 2,4 | 2,3 | 1,9 | 2,2 |
| Klebkraft PP 10 min | N/cm | 6,0 | 6,2 | 7,3 | 6,5 | 1,7 | 1,8 | 2,1 | 1,9 | 0,4 | 0,6 | 0,3 | 0,4 |
| Klebkraft PP 24 h | N/cm | 7,2 | 6,8 | 6,0 | 6,7 | 2,2 | 2,0 | 2,6 | 2,3 | 2,1 | 2,2 | 2,4 | 2,2 |
| Scherfestigkeit RT 100 mm², 0,5kg | min | 1,0 | 2,0 | 1,0 | 1,3 | 837 | 595 | 311 | 581,0 | 1144 | 636 | 290 | 690,0 |
| Scherfestigkeit 70 °C 100 mm², 0,5kg | min | 0,0 | 0,0 | 0,0 | 0,0 | 4 | 4 | 4 | 4,0 | 1 | 2 | 1 | 1,3 |
| Scherfestigkeit RT 625 mm², 1,0kg | min | 79,0 | 58,0 | 39,0 | 58,7 | 10000 | 10000 | 10000 | 10000 | 10000 | 10000 | 10000 | 10000 |
| Scherfestigkeit 70 °C 625 mm², 1,0kg | min | 1,0 | 0,0 | 1,0 | 0,7 | 10000 | 10000 | 10000 | 10000 | 10000 | 10000 | 10000 | 10000 |

Ausgehend vom Vergleichsbeispiel SMP V mit lateralem Präpolymer als alleiniger Silankomponente zeigt sich folgender Trend. Während SMP V mit 75 g/m² ansprechend klebt, jedoch keine Scherfestigkeit zeigt, dokumentieren die erfindungsgemäßen Beispiele, bei denen die Harzmenge (Dertophene H 150) sowie der Anteil weiterer Additive nahezu jeweils unverändert blieben, sowie auch das weitere Vergleichsbeispiel SMP 3, bei dem im Gemisch lateral- (erstes Präpolymer) und endständige (zweites längerkettiges Präpolymer) Silan-Präpolymere im Verhältnis 1:1 zueinander eingesetzt wurden, dass hohe Klebkräfte auf polaren Untergründen (Stahl) zusammen mit einer hohen Scherfestigkeit erkennbar sind. Die Adhäsion insbesondere von SMP 3 auf niederenergetischen Oberflächen wie PE und PP ist allerdings noch optimierungsfähig, selbst bei Grammaturen, die im Bereich von 130 g/m² bis 145 g/m² (Einzelwerte: 133, 135, 143 g/m²) liegen.

Durch den Versatz des lateralen Präpolymers (erstes Präpolymer) mit einem lateralen kürzerkettigen Reaktivverdünner, z. B. Tegopac RD2 (zweites Präpolymer, wie durch Rezeptur SMP 1 veranschaulicht), steigen die Klebkräfte auf unpolaren Oberflächen bei einer spezifischen Klebstoffmenge von 100 g/m², aber die Scherfestigkeit liegt weiter zu niedrig.

Dem wird im Beispiel SMP 2 durch die Kombination von lateralen (erstes Präpolymer) und endständigen Silanpolymeren (hier als zusätzliches Präpolymer) sowie mit einem lateralen kürzerkettigen Reaktivverdünner (zweites Präpolymer) abgeholfen. Der resultierende erfindungsgemäße Haftklebstoff bzw. Haftklebeartikel vereinigt bei einer Klebstoffmenge von nur 50 g/m² gute Klebkräfte mit den erforderlichen Scherfestigkeiten.

Hieran wird deutlich, dass durch eine Variation des Verhältnisses der seitenständigen und der endständigen vernetzbaren Gruppen in dem ersten längerkettigen Präpolymer und dem zweiten kürzerkettigen Präpolymer sowie in dem gegebenenfalls vorhandenen, zusätzlichen längerkettigen Präpolymer vorteilhafterweise eine Steuerung der resultierenden Adhäsion, und insbesondere auch der Kohäsion, erfolgen kann.

Gleichzeitig ist bei dieser Rezeptur SMP 2 das bei der Vernetzung freigesetzte Methanol um 75 % gegenüber einem Herstellungsprozess aus den eingangs beschrieben, bekannten ausschließlich methoxygruppenhaltigen Präpolymeren reduziert. Durch eine Variation des Verhältnisses der methoxygruppenhaltigen zu den ethoxygruppenhaltigen vernetzbaren Gruppen in den erfindungsgemäß eingesetzten Präpolymeren kann die Menge des bei der Vernetzung freigesetzten Methanols gesteuert und dabei insbesondere auf unbedenkliche Werte minimiert werden.

Der erfindungsgemäße Haftklebstoff kann dabei vorteilhafterweise ohne den Zusatz von Mineralöl oder anderen Weichmachern sowie ohne anorganische Füllstoffe hergestellt werden, wobei allerdings kompatible Weichmacher, wie Phthalate oder Öle, die Klebrigkeit auf Kosten der Kohäsion weiter erhöhen können.

In allen Rezepturen wurde gleichermaßen als Harz Dertophene H 150 der Firma DRT eingesetzt, bei dem es sich um ein Terpen-Phenol-Harz mit einem Erweichungspunkt von 118 °C (bestimmt nach dem Ring-Ball-Verfahren) handelt. Als geeignete klebrig machende Harze (Tackifier) können jedoch auch andere phenolmodifizierte Terpenharze, wie z. B. Dertophene T 105 der gleichen Firma, sowie auch Kohlenwasserstoffharze, Rosinesterharze, Acrylharze und deren Mischungen eingesetzt werden. Als kompatible Harze erscheinen auch z. B. C9/C5-Kohlenwasserstoffe mit aliphatisch modifiziertem C9-Anteil geeignet, wobei die Mischbarkeit vom Gehalt an C9 abhängig ist, da C9-Kohlenwasserstoffharze sowie C9-Phenolharze grundsätzlich geeignet sind. Bevorzugten Harze sind - wie auch in den Ausführungsbeispielen angegeben - Terpen-Phenolharze unterschiedlicher Hersteller. Baumharze ("Rosin resins") sind bedingt ebenfalls verträglich, wobei hier die Kompatibilität von verschiedenen Faktoren, wie Molekulargewicht und z. B. Säurezahl, abhängt.

In den Rezepturen zur Herstellung des erfindungsgemäßen Haftklebstoffs können außer zinnhaltigen vorteilhafterweise auch zinnfreie Katalysatoren eingesetzt werden.

Die in den Beispielen V, SMP 1, 2 und 3 in den Tabellen 2 und 3 beschriebenen Haftklebstoffzusammensetzungen wurden hergestellt, indem in eine Schmelze des über seinen Erweichungspunkt auf 175 °C erwärmten Tackifierharzes Dertophene H 150 das auf eine Temperatur von 160 °C vorgelegte Präpolymerengemisch eingebracht und die Mischung bis zur Homogenität gerührt wurde. Anschließend wurde mit dem Katalysator versetzt und nochmals für 5 Minuten gerührt. Je nach den Eigenschaften des eingesetzten klebrigmachenden Harzes, insbesondere je nach dessen Erweichungspunkt, kann dabei bei unterschiedlichen Temperaturen gearbeitet werden. Für Dertophene T 105 genügt es beispielsweise das klebrigmachende Harz auf eine Temperatur von 160 °C zu bringen.

Außer den in Tabelle 1 genannten Stoffen können z. B. zusätzlich auch Alterungsstabilisatoren eingesetzt werden, ohne dass der Rahmen der Erfindung verlassen wird.

Das Gemisch zur Herstellung des Haftklebstoffes wurde direkt mittels eines Kammerrakels auf eine 50 µm dicke Polyethylenterephthalat-Folie (PET-Folie) als gleichmäßiger Film ausgestrichen und unter Normklimakonditionen (Temperatur 23°C, relative Feuchte 55 %) einer Vernetzung durch Luftfeuchtigkeit unterzogen. Nach Vernetzung lag das jeweilige Auftragsgewicht des Klebstofffilms bei den in den Tabellen 2 und 3 exemplarisch angegebenen Werten. Die auf diese Weise beschichteten Muster wurden zu einem nicht haftenden Abdeckmaterial kaschiert und für mindestens 24 Stunden unter Normklimabedingungen gelagert. Es versteht sich, dass zur Herstellung eines erfindungsgemäßen Haftklebeartikels eine auch von diesen Auftragungsbedingungen abweichende Beschichtung erfolgen und ein anderer Folien- oder auch textiler Träger eingesetzt werden kann.

## Patentansprüche

1. Verfahren zur Herstellung eines Haftklebstoffs auf der Basis eines silanmodifizierten Polymers, welcher mindestens ein silylhaltiges Polymer, mindestens ein kompatibles klebrig machendes Harz und mindestens einen Katalysator enthält, wobei
der Haftklebstoff aus einem Gemisch von kettenförmigen silanmodifizierten alkoxysilierten Präpolymeren hergestellt wird, wobei das Gemisch mindestens ein erstes, silanmodifiziertes, an der Kette seitenständig ethoxysiliertes Präpolymer und mindestens ein zweites silanmodifiziertes, an der Kette endständig und/oder seitenständig ethoxysiliertes und/oder methoxysiliertes Präpolymer enthält, wobei das erste Präpolymer und das zweite Präpolymer unter Abspaltung von Alkohol miteinander vernetzt werden,
**dadurch gekennzeichnet, dass** das erste, silanmodifizierte an der Kette seitenständig ethoxysilierte Präpolymer ein längerkettiges Präpolymer ist als das zweite kürzerkettige, an der Kette endständig und/oder seitenständig ethoxysilierte und/oder methoxysilierte Präpolymer, wobei die Kettenlänge als eine Gesamtkettenlänge aus der Hauptkette und - wenn vorhanden - aller Seitenketten verstanden wird und der Gesamtkettenlänge die jeweilige molare Masse des Präpolymers entspricht, wobei der Gesamtanteil von silanmodifizierten methoxysilierten Präpolymeren im Gemisch der kettenförmigen silanmodifizierten alkoxysilierten Präpolymere höchstens 50 Ma.-% beträgt.

2. Verfahren nach Anspruch 1,
**dadurch gekennzeichnet, dass** unterschiedliche zweite, insbesondere kürzerkettige, silanmodifizierte, an der Kette ethoxysilierte und/oder methoxysilierte Präpolymere im Gemisch eingesetzt werden.

3. Verfahren nach Anspruch 1 oder 2,
**dadurch gekennzeichnet, dass** der Polymerisationsgrad des zweiten Präpolymers kleiner ist als der Polymerisationsgrad des ersten Präpolymers, wobei die Polymerisationsgrade um mindestens zwei Zehnerpotenzen differieren.

4. Verfahren nach einem der Ansprüche 1 bis 3,
**dadurch gekennzeichnet, dass** das zweite Präpolymer eine Kettenlänge von weniger als 14 K, insbesondere weniger als 10 K, besonders bevorzugt weniger als 8 K, aufweist.

5. Verfahren nach einem der Ansprüche 1 bis 4,
**dadurch gekennzeichnet, dass** das erste Präpolymer eine Kettenlänge im Bereich von 10 K bis 24 K, insbesondere 12 K bis 20 K, besonders bevorzugt von 14 K bis 18 K aufweist.

6. Verfahren nach einem der Ansprüche 1 bis 5,
**dadurch gekennzeichnet, dass** das erste Präpolymer oder das zweite Präpolymer oder die Präpolymere der Mischung Polyurethane und/oder Polyether mit ein, zwei oder drei Gruppen vom Mono-, Di- oder Trialkoxysilan-Typ sind.

7. Verfahren nach einem der Ansprüche 1 bis 6,
**dadurch gekennzeichnet, dass** das erste Präpolymer oder das zweite Präpolymer oder die Präpolymere der Mischung als funktionelle Gruppen Amino-, Glycidoxy-, Schwefel- und Methacryloxy-Gruppen im Molekül enthalten, die in Y-Stellung über eine Propylenbrücke oder vorzugsweise in α-Stellung über eine Methylengruppe an mindestens ein Silicium-Atom des ethoxysilierten und/oder methoxysilierten Präpolymers gebunden sind.

8. Verfahren nach einem der Ansprüche 1 bis 7,
**dadurch gekennzeichnet, dass** das Gemisch zur Herstellung des Haftklebstoffes längerkettige, endständig silanmodifizierte, alkoxysilierte, insbesondere methoxysilierte und/oder ethoxysilierte, Präpolymere enthält.

9. Verfahren nach Anspruch 8,
**dadurch gekennzeichnet, dass** der Anteil von längerkettigen, endständig silanmodifizierten, alkoxysilierten Präpolymen kleiner ist als 15 Ma.-% der Summe der Masse von Präpolymeren, Harz, Katalysator und gegebenenfalls vorhandenen weiteren Inhaltsstoffen.

10. Verfahren nach einem der Ansprüche 1 bis 9,
**dadurch gekennzeichnet, dass** dem Gemisch von kettenförmigen, silanmodifizierten alkoxysilierten Präpolymeren klebrigmachende Harze zugefügt werden, insbesondere in einem Verhältnis von 1 : 4 bis 4 : 1, vorzugsweise in einem Verhältnis 1 : 1.

11. Verfahren nach einem der Ansprüche 1 bis 10,
**dadurch gekennzeichnet, dass** mindestens eines der beiden Präpolymere, oder beide Präpolymere, aus verzweigten oder unverzweigten Kettenmolekülen bestehen, wobei die endständige und/oder seitenständige Silanmodifizierung in einem verzweigten Kettenmolekül an einer Seitenkette und/oder an der Hauptkette vorliegt.

12. Haftklebstoff, hergestellt nach einem Verfahren gemäß einem der Ansprüche 1 bis 11.

13. Verwendung eines Haftklebstoffs nach Anspruch 12 zur Herstellung eines Haftklebeartikels, wie eines Klebebandes oder eines Etiketts, umfassend einen Träger, auf den zumindest einseitig der Haftklebstoff in Form einer Klebstoffmasse aufgetragen wird.

## Claims

1. Method for producing a pressure-sensitive adhesive on the basis of a silane-modified polymer, comprising at least one silyl-containing polymer, at least one compatible tackifying resin and at least one catalyst, where
the pressure-sensitive adhesive is prepared from a mixture of chainlike, silane-modified, alkoxysilylated prepolymers, the mixture comprising at least one first, silane-modified prepolymer with ethoxysilylation laterally on the chain, and at least one second, silane-modified prepolymer with ethoxysilylation and/or methoxysilylation terminally and/or laterally on the chain, where the first prepolymer and the second prepolymer are crosslinked with one another with elimination of alcohol,
**characterized in that** the first, silane-modified prepolymer with ethoxysilylation laterally on the chain is a longer-chain prepolymer than the second, shorter-chain prepolymer with ethoxysilylation and/or methoxysilylation laterally and/or terminally on the chain, where the chain length is understood as being a total chain length made up of the main chain and - if present - all the side chains, and the total chain length corresponds to the respective molar mass of the prepolymer, where the total fraction of silane-modified, methoxysilylated prepolymers in the mixture of the chainlike, silane-modified, alkoxysilylated prepolymers is at most 50 mass%.

2. Method according to Claim 1,
**characterized in that** different second, in particular shorter-chain, silane-modified prepolymers with ethoxysilylation and/or methoxysilylation on the chain are used in the mixture.

3. Method according to Claim 1 or 2,
**characterized in that** the degree of polymerization of the second prepolymer is lower than the degree of polymerization of the first prepolymer, with the degrees of polymerization differing by at least two powers of ten.

4. Method according to one of Claims 1 to 3,
**characterized in that** the second prepolymer has a chain length of less than 14 K, in particular less than 10 K, particularly preferably less than 8 K.

5. Method according to one of Claims 1 to 4,
**characterized in that** the first prepolymer has a chain length in the range from 10 K to 24 K, in particular 12 K to 20 K, particularly preferably from 14 K to 18 K.

6. Method according to one of Claims 1 to 5,
**characterized in that** the first prepolymer or the second prepolymer or the prepolymers of the mixture are polyurethanes and/or polyethers having one, two or three groups of the mono-, di- or trialkoxysilane type.

7. Method according to one of Claims 1 to 6,
**characterized in that** the first prepolymer or the second prepolymer or the prepolymers of the mixture contain, in the molecule, as functional groups, amino, glycidyloxy, sulfur and methacryloyloxy groups, which are bonded in γ position via a propylene bridge or preferably in α position via a methylene group to at least one silicon atom of the ethoxysilylated and/or methoxysilylated prepolymer.

8. Method according to one of Claims 1 to 7,
**characterized in that** the mixture for preparing the pressure-sensitive adhesive comprises longer-chain, terminally silane-modified, alkoxysilylated, in particular methoxysilylated and/or ethoxysilylated, prepolymers.

9. Method according to Claim 8,
**characterized in that** the fraction of longer-chain, terminally silane-modified, alkoxysilylated prepolymers is less than 15 mass% of the sum total of the mass of prepolymers, resin, catalyst and any further ingredients present.

10. Method according to one of Claims 1 to 9,
**characterized in that** the mixture of chainlike, silane-modified, alkoxysilylated prepolymers is admixed with tackifying resins, in particular in a ratio of 1:4 to 4:1, more particularly in a ratio of 1:1.

11. Method according to one of Claims 1 to 10,
**characterized in that** at least one of the two prepolymers, or both the prepolymers, consist of branched or unbranched chain molecules, with the terminal and/or lateral silane modification in a branched chain molecule being present on a side chain and/or on the main chain.

12. Pressure-sensitive adhesive produced by a method according to one of Claims 1 to 11.

13. Use of a pressure-sensitive adhesive according to Claim 12 for producing a pressure-sensitive adhesive article, such as an adhesive tape or a label, comprising a carrier to which the pressure-sensitive adhesive in the form of an adhesive composition is applied on at least one side.

## Revendications

1. Procédé pour la préparation d'un autoadhésif sur la base d'un polymère modifié par silane, qui contient au moins un polymère contenant silyle, au moins une résine compatible rendant adhésif et au moins un catalyseur, l'autoadhésif étant préparé à partir d'un mélange de prépolymères en forme de chaîne, alcoxysilylés modifiés par silane, le mélange contenant au moins un premier prépolymère modifié par silane, éthoxysilylé en position latérale de la chaîne et au moins un deuxième prépolymère modifié par silane, éthoxysilylé et/ou méthoxysilylé en position terminale et/ou latérale de la chaîne, le premier prépolymère et le deuxième prépolymère étant réticulés l'un avec l'autre avec dissociation d'alcool, **caractérisé en ce que** le premier prépolymère modifié par silane, éthoxysilylé en position latérale de la chaîne est un prépolymère à chaîne plus longue que le deuxième prépolymère à chaîne plus courte, éthoxysilylé et/ou méthoxysilylé en position terminale et/ou latérale de la chaîne, la longueur de chaîne désignant une longueur totale de chaîne constituée par la chaîne principale et - le cas échéant - toutes les chaînes latérales et la longueur de chaîne totale correspondant à la masse molaire respective du prépolymère, la proportion totale de prépolymères modifiés par silane, méthoxysilylés dans le mélange des prépolymères en forme de chaîne, modifiés par silane, alcoxysilylés étant d'au maximum 50% en masse.

2. Procédé selon la revendication 1, **caractérisé en ce que** différents deuxièmes prépolymères, en particulier à chaîne plus courte, modifiés par silane, éthoxysilylés et/ou méthoxysilylés sur la chaîne, sont utilisés en mélange.

3. Procédé selon la revendication 1 ou 2, **caractérisé en ce que** le degré de polymérisation du deuxième prépolymère est inférieur au degré de polymérisation du premier prépolymère, les degrés de polymérisation étant différents d'au moins deux puissances de dix.

4. Procédé selon l'une quelconque des revendications 1 à 3, **caractérisé en ce que** le deuxième prépolymère présente une longueur de chaîne inférieure à 14 K, en particulier inférieure à 10 K, de manière particulièrement préférée inférieure à 8 K.

5. Procédé selon l'une quelconque des revendications 1 à 4, **caractérisé en ce que** le premier prépolymère présente une longueur de chaîne dans la plage de 10 K à 24 K, en particulier de 12 K à 20 K, de manière particulièrement préférée de 14 K à 18 K.

6. Procédé selon l'une quelconque des revendications 1 à 5, **caractérisé en ce que** le premier prépolymère ou le deuxième prépolymère ou les prépolymères du mélange sont des polyuréthanes et/ou des polyéthers présentant un, deux ou trois groupes du type monoalcoxysilane, dialcoxysilane ou trialcoxysilane.

7. Procédé selon l'une quelconque des revendications 1 à 6, **caractérisé en ce que** le premier prépolymère ou le deuxième prépolymère ou les prépolymères du mélange contiennent, comme groupes fonctionnels, des groupes amino, glycidoxy, soufre et méthacryloxy dans la molécule, qui sont liés en position γ via un pont propylène ou de préférence en position α via un groupe méthylène à au moins un atome de silicium du prépolymère éthoxysilylé et/ou méthoxysilylé.

8. Procédé selon l'une quelconque des revendications 1 à 7, **caractérisé en ce que** le mélange pour la préparation de l'autoadhésif contient des prépolymères à chaîne plus longue, modifiés par silane en position terminale, alcoxysilylés, en particulier méthoxysilylés et/ou éthoxysilylés.

9. Procédé selon la revendication 8, **caractérisé en ce que** la proportion de prépolymères à chaîne plus longue, modifiés par silane en position terminale, alcoxysilylés est inférieure à 15% en masse de la somme des masses de prépolymères, de résine, de catalyseur et le cas échéant d'autres constituants présents.

10. Procédé selon l'une quelconque des revendications 1 à 9, **caractérisé en ce que** le mélange de prépolymères en forme de chaîne, modifiés par silane, alcoxysilylés est additionné de résines rendant adhésif, en particulier dans un rapport de 1:4 à 4:1, de préférence dans un rapport de 1:1.

11. Procédé selon l'une quelconque des revendications 1 à 10, **caractérisé en ce qu'**au moins l'un des deux prépolymères ou les deux prépolymères est/sont constitué(s) par des molécules en forme de chaîne, ramifiées ou non ramifiées, la modification par silane en position terminale et/ou latérale se trouvant dans une molécule en forme de chaîne sur une chaîne latérale et/ou sur la chaîne principale.

12. Autoadhésif préparé selon un procédé selon l'une quelconque des revendications 1 à 11.

13. Utilisation d'un autoadhésif selon la revendication 12 pour la préparation d'un article autoadhésif, tel qu'un ruban adhésif ou une étiquette, comprenant un support sur lequel est appliqué l'autoadhésif sous la forme d'une masse adhésive sur au moins une face.
